# EUROPEAN PATENT SPECIFICATION

(11) **EP 1 999 324 B1**
(45) Date of publication and mention of the grant of the patent: **26.03.2014**
(21) Application number: 06851813.3
(22) Date of filing: 21.12.2006
(51) Int. Cl.: E05B 5/00

(54) **DOOR HANDLE LOCK ASSEMBLY WITH AUTOMATIC LOCK AND RETRACT**
TÜRGRIFFVERSCHLUSSANORDNUNG MIT AUTOMATISCHEM VERSCHLUSS UND EINZUG
ENSEMBLE SERRURE DE POIGNÉE DE PORTE AVEC OPÉRATIONS DE VERROUILLAGE ET DE RÉTRACTION AUTOMATIQUES

(30) Priority: 29.12.2005 US 319412
(43) Date of publication of application: 10.12.2008
(73) Proprietor: Bell Helicopter Textron Inc., Hurst, TX 76053 (US)
(72) Inventor: HALL, George M., Avalon Texas 76623 (US)
(74) Representative: Lawrence, John
(86) International application number: PCT/US2006/062481
(87) International publication number: WO 2008/048329

(56) References cited:
- EP-A- 1 544 383
- AT-B- 303 565
- DE-C- 254 340
- DE-C- 373 259
- DE-U1- 8 614 642
- US-A- 2 349 192
- US-A- 2 375 196

## Description

### Field of the Invention

The present invention relates to a door handle lock assembly, and more particularly, to a door handle lock assembly for a door of an aircraft.

### Description of the Related Art

Door handle lock assemblies for aircraft doors generally include a handle on the outside of the door that is configured to be flush with an outer surface of the aircraft when the aircraft is in flight. The outside handle is flush with the outer surface to prevent or reduce drag on the outer surface of the aircraft. Current door handle lock assemblies include handles that may be pivoted from a position flush with the outer surface to a position where the outside handle may be operated to open the door. Other current door handle lock assemblies include handles that may be moved into and out of the flush position by operation of a mechanism, for example a cam mechanism or a spring loaded mechanism.

US-A-2,375,196 discloses an aircraft door locking mechanism in which a bolt-shifting mechanism which is key controlled from outside of the door. DE373259C discloses a lock for a railway carriage. AT303565B discloses a lock for a window.

One problem with current door handle lock assemblies for aircraft doors is that although the outside handle may be in the flush position, the door may not be latched or locked. Another problem is that there is no positive lock on the door to prevent the door from being opened accidentally without a second operation of the inside handle. An even further problem with current aircraft door handle lock assemblies is they are complicated and not easily operated.

### SUMMARY OF THE INVENTION

A door handle lock assembly according to the present invention includes a housing configured to be attached to a door. A interconnecting member is rotatably and axially movably supported by the housing. A first handle is fixed to the interconnecting member at a first end of the interconnecting member and a second handle is fixed to the interconnecting member at a second end of the interconnecting member. The door is between the second handle and the housing. The door handle lock assembly is changed from a locked condition to an unlocked condition by axially moving the interconnecting member from a first position to a second position and then rotating the interconnecting member and a lock member fixed to the interconnecting member between the first handle and the second handle, the lock member being configured to engage the housing to prevent rotation of the interconnecting member when the interconnecting member is in the first position and to disengage from the housing when the interconnecting member is moved from the first position to the second position to permit rotation of the interconnecting member.

### BRIEF DESCRIPTION OF THE DRAWINGS

Embodiments of the present invention will be described below with references to the following drawings, in which corresponding reference numbers depict corresponding features throughout the figures, and wherein:
Figure 1 is a schematic perspective view of a door handle lock assembly according the present invention in a locked position;
Figure 2 is a schematic perspective view of the door handle lock assembly in an unlocked position;
Figure 3 is a perspective side view of the door handle lock assembly in the locked position;
Figure 4 is a side elevation view of the door handle lock assembly in the locked position;
Figure 5 is a perspective top view of the door handle lock assembly in the locked position;
Figure 6 is a top plan view of the door handle lock assembly in the locked position;
Figure 7 is a top plan view of the door handle lock assembly in the unlocked position;
Figure 8 is a perspective view of the door handle lock assembly in the locked position; and
Figure 9 is a perspective view of the door handle lock assembly prior to entering the unlocked position.

### DETAILED DESCRIPTION

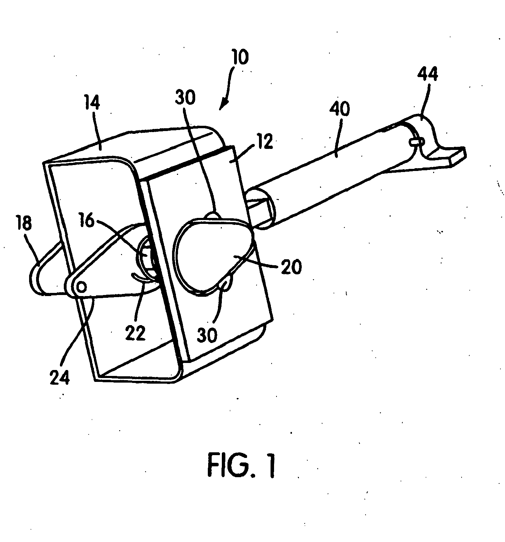

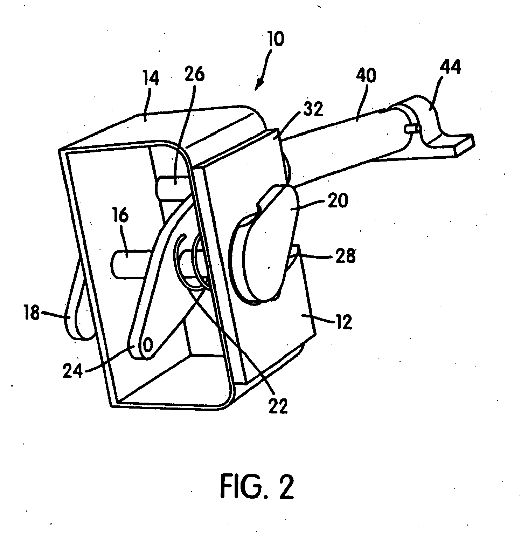

Referring to Figures 1 and 2, a door handle lock assembly 10 according to the invention is mounted to a door 12 of an aircraft. The door 12 of the aircraft is only partially shown in the figures for clarity. The assembly 10 further includes a housing 14 that supports a handle assembly. The handle assembly includes a interconnecting member 16 that is rotatably supported by the housing 14. The interconnecting member 16 is also supported by the housing 14 so as to be translatable in a direction defined by the longitudinal axis of the interconnecting member 16. The interconnecting member 16 may be a shaft. It should be appreciated that the shaft may be formed from a unitary piece, or may be a plurality of pieces that are connected.

An inner handle 18 is fixed to the interconnecting member 16 at a first side of the housing 14. When the door is closed, the inner handle 18 will be accessible from the interior of the aircraft. An outer handle 20 is also fixed to the interconnecting member 16 at a second side of the housing 14. The outer handle 20 will be accessible from the exterior of the aircraft when the door is closed. A locking member 24 is fixed to the interconnecting member 16 for rotation and translation with the interconnecting member 16. A spring 22 is disposed between the locking member 24 and the housing 14 to bias the assembly 10 into the locked position shown in Figure 1. As shown in Figure 1, when the assembly is in the locked position, the outer handle 20 is received in a recess 28 in the door 12. The recess 28 has a shape that is complementary to the shape of the outer handle 20 so that when the outer handle 20 is received in the recess 28, the outer handle 20 is flush with the exterior surface of the door 12.

The recess 28 includes additional recesses 30 on opposite sides of the outer handle 20 that permit an operator on the exterior side of the door to grip the outer handle 20 when the outer handle is in the locked position. The operator can grip the outer handle 20 and pull the outer handle against the bias of the spring 22 to begin to unlock the assembly 10. The outer handle 32 may include an undercut portion 32, or portions, to improve the operator's ability to grip the outer handle 20. Once the operator has pulled the outer handle 20 out of the recess 28, the operator can rotate the outer handle 20 to complete the unlocking procedure. An operator on the interior side of the door can unlock the assembly 10 by first pushing on the inner handle 18 against the bias of the spring 22 so that the outer handle 20 is moved out of the recess 28 in the door. The operator can then rotate the inner handle 18 from the position shown in Figure 1 to the position shown in Figure 2.

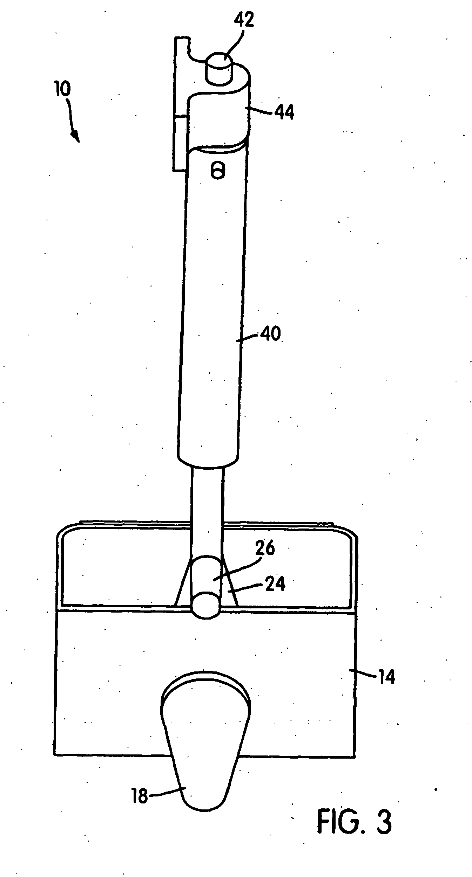

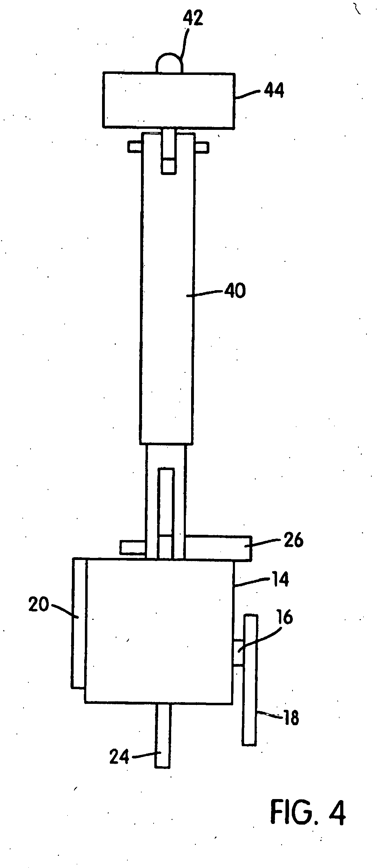

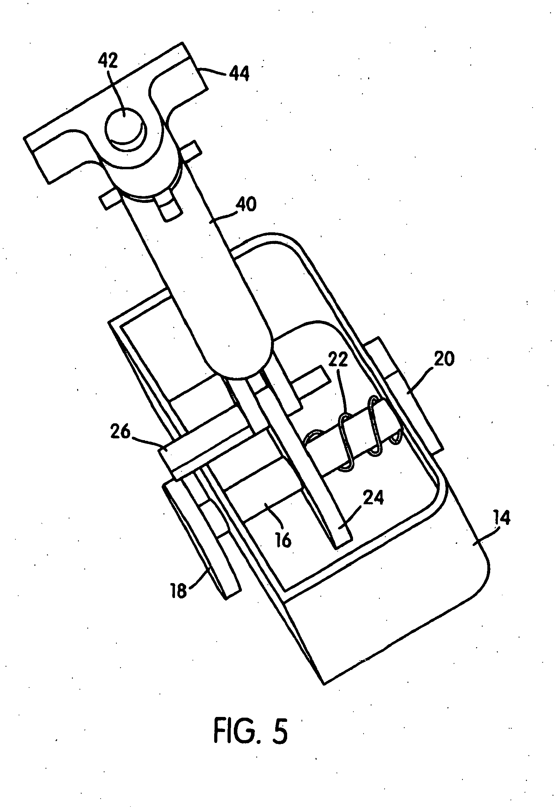

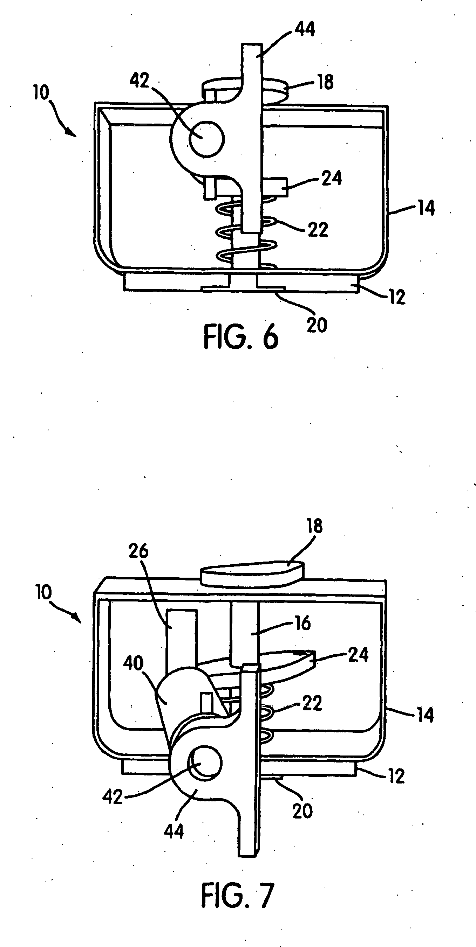

Referring to Figures 3 -7, when the assembly is in the locked position, a locking projection 26, which is fixed to the locking member 24, is in engagement with the housing 14, as shown in Figures 3 - 5, to prevent rotation of the interconnecting member 16, and thus prevent rotation of the inner handle 18 and the outer handle 20. The operator begins the unlocking procedure by moving the interconnecting member 16 and the locking member 24 against the bias of the spring 22. If the operator is inside the aircraft, the operator pushes on the inner handle 18 to move the interconnecting member 16 and the locking member 24 against the bias of the spring 22. If the operator is outside the aircraft the operator grasps the outer handle 20 and pulls against the bias of the spring 22. When the locking member 24 is moved from the position shown in Figures 3 - 5 to the position shown in Figure 7, the locking projection 26 is disengaged from the housing, and then the interconnecting member 16 may be rotated by rotation of either inner handle 18 or outer handle 20.

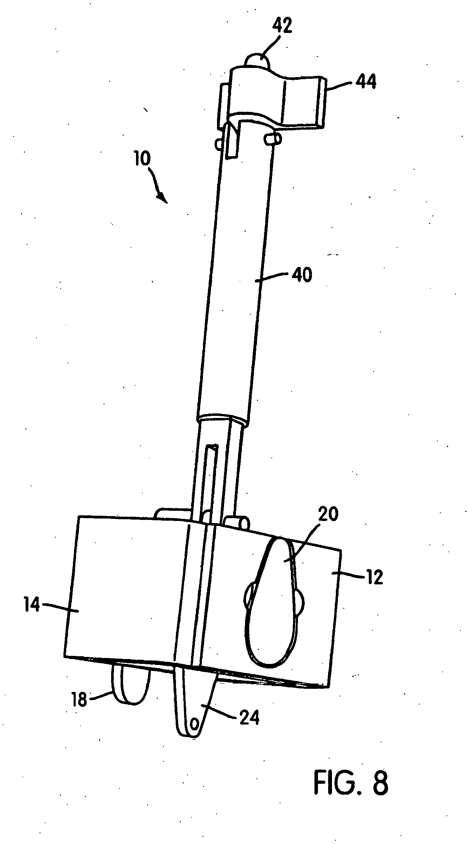

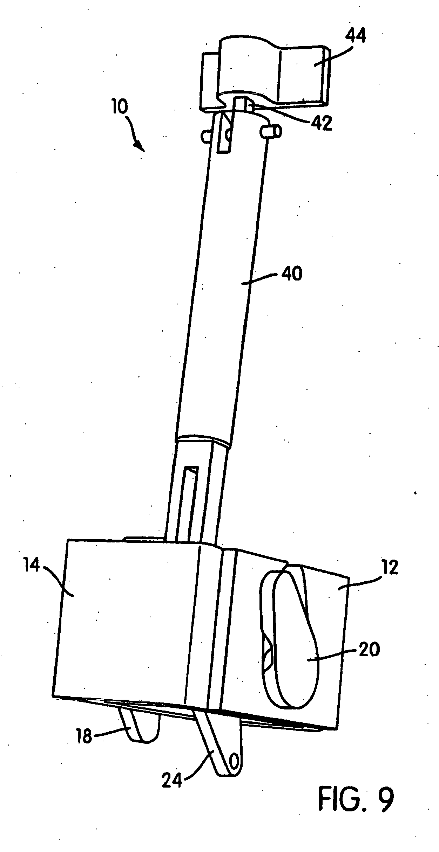

A locking bolt 40 is pivotally connected to the locking member 24 by the locking projection 26 at a first end of the locking bolt 40. It should be appreciated that the locking bolt may be pivotally connected to the locking member at a position other than the locking projection. A locking pin 42 is pivotally connected to the locking bolt 40 at a second end of the locking bolt 40. The locking pin 42 is received in a locking flange 44 that is positioned on the periphery of the doorway. When the locking pin 42 is received in the locking flange 44, the door 12 is locked. When the locking projection 26 is disengaged from the housing 14, either by pushing the inner handle 18 or pulling the outer handle 20, and the locking member 24 is rotated, the locking bolt 40 is moved from the position in Figure 8 to the position in Figure 9. As shown in Figure 9, the locking pin 42 is being withdrawn from the locking flange 44. Continued rotation of the handles 18 and 20 from the position shown in Figure 9 will completely withdraw the locking pin 42 from the locking flange 44 and unlock the door 12.

Although one locking bolt 40 is shown attached to one end of the locking member 24 in Figures 1-9, it should be appreciated that a second locking bolt may be pivotally connected to the locking member 24 at the other end. It should also be appreciated that the locking member 24 may be shaped to have multiple, i.e. more than two, ends for the pivotal connection of multiple locking bolts. It should be further appreciated that although only one locking projection 26 is shown connected to the locking member 24, multiple locking projections may be connected to the locking member 24. It should be even further appreciated that although the locking bolt is shown pivotally connected to the locking pin which is received in the locking flange, the locking pin and or the locking flange are not required and the locking bolt may pass through an aperture in the door and an aperture in the frame defining the doorway to lock the door.

As shown in the figures, when the outer handle 20 is received in the recess 28 of the door 12, the door handle lock assembly is in the locked position. An operator on the outside of the aircraft can determine that the door is locked merely by confirming that the outer handle 20 is received in the recess 28. The door cannot be accidentally unlocked by pulling the outer handle 20 or pushing the inner handle 18. The door can only be unlocked by either pushing the inner handle or pulling the outer handle, and then rotating the handle to cause the locking bolts to move from the locked position to the unlocked position. When the assembly is in the unlocked position and it is desired to place the assembly in the locked position, inner handle 18 or the outer handle 20 is rotated and the bias of the spring 22 automatically retracts the handles 18 and 20 to their locked positions.

Although the present invention has been described with references to the embodiments disclosed herein, it should be appreciated that numerous variations and modifications may be made without departing from the spirit and scope of the present invention.

## Claims

1. A door handle lock assembly (10), comprising:
a housing (14) configured to be attached to a door (12);
an interconnecting member (16) rotatably and axially movably supported by the housing;
a first handle (18) fixed to the interconnecting member at a first end of the interconnecting member (16);
a second handle (20) fixed to the interconnecting member at a second end of the interconnecting member, wherein the door is between the second handle and the housing, and the door handle lock assembly (10) is changed from a locked condition to an unlocked condition by axially moving the interconnecting member (16) from a first position to a second position and then rotating the interconnecting member; and a locking projection (26) fixed to
a lock member (24) fixed to the interconnecting member between the first handle (18) and the second handle (20), the locking projection (26) being configured to engage the housing (14) to prevent rotation of the interconnecting member (16) when the interconnecting member (16) is in the first position and to disengage from the housing (14) when the interconnecting member (16) is moved from the first position to the second position to permit rotation of the interconnecting member (16).

2. A door handle lock assembly according to claim 1, further comprising a spring between the lock member and the housing that biases the interconnecting member into the first position.

3. A door handle lock assembly according to claim 2, wherein the lock member includes a locking projection that engages the housing to prevent rotation of the interconnecting member when the interconnecting member is in the first position and is disengaged from the housing when the interconnecting member is moved from the first position to the second position to permit rotation of the interconnecting member.

4. A door handle lock assembly according to claim 3, further comprising a locking bolt pivotally connected to the locking member.

5. A door handle lock assembly according to claim 4, wherein the locking bolt is pivotally connected to the locking member by the locking projection.

6. A door handle lock assembly according to claim 5, further comprising a locking pin pivotally connected to an end of the locking bolt opposite an end at which the locking bolt is pivotally connected to the locking member.

7. A door handle lock assembly according to claim 1, wherein the outer handle is configured to be received in a recess in the door when the interconnecting member is in the first position.

8. A door handle lock assembly according to claim 7, wherein the recess comprises a first recess having a shape complementary to the shape of the outer handle.

9. A door handle lock assembly according to claim 8, wherein the recess further comprises a second recess and/or the outer handle includes a recess.

10. A door handle lock assembly according to claim 7, wherein the outer handle is configured to be flush with an outer surface of the door when the interconnecting member is in the first position.

11. A door handle lock assembly according to claim 1, wherein the interconnecting member is a shaft.

12. An aircraft including a door and a door handle lock assembly according to any of claims 1 to 11.

## Patentansprüche

1. Türgriff-Riegelanordnung (10), aufweisend:
ein Gehäuse (14), das so gestaltet ist, dass es an einer Tür (12) befestigt werden kann;
ein Zwischenverbindungsglied (16), das von dem Gehäuse drehbar und axial beweglich gelagert wird;
einen ersten Griff (18), der an einem ersten Ende des Zwischenverbindungsglieds (16) an dem Zwischenverbindungsglied fixiert ist;
einen zweiten Griff (20), der an einem zweiten Ende des Zwischenverbindungsglieds am Zwischenverbindungsglied fixiert ist, wobei sich die Tür zwischen dem zweiten Griff und dem Gehäuse befindet, und wobei die Türgriff-Riegelanordnung (10) durch axiales Bewegen des Zwischenverbindungsglieds (16) aus einer ersten Stellung in eine zweite Stellung und anschließendes Drehen des Zwischenverbindungsglieds aus einem verriegelten Zustand in einen unverriegelten Zustand gebracht werden kann; und einen Verriegelungsvorsprung (26), der an einem Riegelglied (24) fixiert ist, das zwischen dem ersten Griff (18) und dem zweiten Griff (20) am Zwischenverbindungsglied fixiert ist, wobei der Verriegelungsvorsprung (26) so gestaltet ist, dass er am Gehäuse (14) angreift, um eine Drehung des Zwischenverbindungsglieds (16) zu verhindern, wenn das Zwischenverbindungsglied (16) die erste Stellung einnimmt, und sich vom Gehäuse (14) löst, wenn das Zwischenverbindungsglied (16) aus der ersten Stellung in die zweite Stellung bewegt wird, um eine Drehung des Zwischenverbindungsglieds (16) zuzulassen.

2. Türgriff-Riegelanordnung nach Anspruch 1, ferner eine Feder zwischen dem Riegelglied und dem Gehäuse aufweisend, die das Zwischenverbindungsglied in die erste Stellung vorspannt.

3. Türgriff-Riegelanordnung nach Anspruch 2, wobei das Riegelglied einen Verriegelungsvorsprung aufweist, der am Gehäuse angreift, um eine Drehung des Zwischenverbindungsglieds zu verhindern, wenn das Zwischenverbindungsglied die erste Stellung einnimmt, und sich vom Gehäuse löst, wenn das Zwischenverbindungsglied aus der ersten Stellung in die zweite Stellung bewegt wird, um eine Drehung des Zwischenverbindungsglieds zuzulassen.

4. Türgriff-Riegelanordnung nach Anspruch 3, ferner einen Verriegelungsbolzen aufweisend, der verschwenkbar mit dem Verriegelungsglied verbunden ist.

5. Türgriff-Riegelanordnung nach Anspruch 4, wobei der Verriegelungsbolzen durch den Verriegelungsvorsprung verschwenkbar mit dem Verriegelungsglied verbunden ist.

6. Türgriff-Riegelanordnung nach Anspruch 5, ferner einen Verriegelungsstift aufweisend, der verschwenkbar mit einem Ende des Verriegelungsbolzens verbunden ist, welches einem Ende gegenüber liegt, an dem der Verriegelungsbolzen verschwenkbar mit dem Verriegelungsglied verbunden ist.

7. Türgriff-Riegelanordnung nach Anspruch 1, wobei der äußere Griff so gestaltet ist, dass er in einer Aussparung der Tür aufgenommen werden kann, wenn das Zwischenverbindungsglied die erste Stellung einnimmt.

8. Türgriff-Riegelanordnung nach Anspruch 7, wobei die Aussparung eine erste Aussparung mit einer Form umfasst, die komplementär ist zum äußeren Griff.

9. Türgriff-Riegelanordnung nach Anspruch 8, wobei die Aussparung ferner eine zweite Aussparung umfasst und/oder der äußere Griff eine Aussparung aufweist.

10. Türgriff-Riegelanordnung nach Anspruch 7, wobei der äußere Griff so gestaltet ist, dass er mit einer Außenfläche der Tür bündig ist, wenn das Zwischenverbindungsglied die erste Stellung einnimmt.

11. Türgriff-Riegelanordnung nach Anspruch 1, wobei das Zwischenverbindungsglied eine Welle ist.

12. Flugzeug, eine Tür und eine Türgriff-Riegelanordnung nach einem der Ansprüche 1 bis 11 aufweisend.

## Revendications

1. Ensemble serrure de poignée de porte (10), comprenant :
un boîtier (14) configuré pour être fixé à une porte (12) ;
un élément d'interconnexion (16) mobile de manière rotative et axialement supporté par le boîtier ;
une première poignée (18) fixée à l'élément d'interconnexion à une première extrémité de l'élément d'interconnexion (16) ;
une seconde poignée (20) fixée à l'élément d'interconnexion à une seconde extrémité de l'élément d'interconnexion,
dans lequel la porte se situe entre la deuxième poignée et le boîtier, et l'ensemble serrure de poignée de porte (10) est changé à partir d'un état verrouillé à un état déverrouillé par déplacement axial de l'élément d'interconnexion (16) d'une première position à une deuxième position puis rotation de l'élément d'interconnexion, et une saillie de verrouillage (26) fixée à un élément de verrouillage (24) fixé à l'élément d'interconnexion entre la première poignée (18) et la seconde poignée (20), la saillie de verrouillage (26) étant configurée pour venir en contact avec le boîtier (14) pour empêcher la rotation de l'élément d'interconnexion (16) lorsque l'élément d'interconnexion (16) est dans la première position et pour se dégager du boîtier (14) lorsque l'élément d'interconnexion (16) est déplacé de la première position à la seconde position pour permettre la rotation de l'élément d'interconnexion (16).

2. Ensemble serrure de poignée de porte selon la revendication 1,
comprenant en outre un ressort entre l'élément de verrouillage et le boîtier qui sollicite l'élément d'accouplement dans la première position.

3. Ensemble serrure de poignée de porte selon la revendication 2,
dans lequel l'élément de verrouillage comprend une saillie de verrouillage qui met en prise le boîtier pour empêcher la rotation de l'élément d'accouplement lorsque l'élément d'accouplement est dans la première position et est désengagé du boîtier lorsque l'élément d'interconnexion est déplacé de la première position à la seconde position pour permettre rotation de l'élément d'interconnexion.

4. Ensemble serrure de poignée de porte selon la revendication 3,
comprenant en outre un verrou de fermeture relié de façon pivotante à l'élément de verrouillage.

5. Ensemble serrure de poignée de porte selon la revendication 4, dans lequel le verrou de fermeture est relié de façon pivotante à l'élément de verrouillage par la saillie de verrouillage.

6. Ensemble serrure de poignée de porte selon la revendication 5, comprenant en outre une goupille de verrouillage reliée de manière pivotante à une extrémité du verrou de fermeture en regard d'une extrémité à laquelle le verrou de fermeture est relié de façon pivotante à l'élément de verrouillage.

7. Ensemble serrure de poignée de porte selon la revendication 1, dans lequel la poignée extérieure est configurée pour être reçue dans un renfoncement de la porte lorsque l'élément d'interconnexion est dans la première position.

8. Ensemble serrure de poignée de porte selon la revendication 7, dans lequel le renfoncement comprend un premier renfoncement ayant une forme complémentaire avec la forme de la poignée extérieure.

9. Ensemble serrure de poignée de porte selon la revendication 8,
dans lequel le renfoncement comprend en outre un deuxième renfoncement et/ou la poignée extérieure comprend un renfoncement.

10. Ensemble serrure de poignée de porte selon la revendication 7, dans lequel la poignée extérieure est configurée pour être alignée avec une surface extérieure de la porte lorsque l'élément d'interconnexion est dans la première position.

11. Ensemble serrure de poignée de porte selon la revendication 1, dans lequel l'élément d'interconnexion est un arbre.

12. Aéronef comprenant une porte et un ensemble serrure de poignée de porte selon l'une quelconque des revendications 1 à 11.
